# EUROPÄISCHE PATENTANMELDUNG

(11) **EP 0 835 775 A1**
(43) Veröffentlichungstag der Anmeldung: **15.04.1998**
(21) Anmeldenummer: 97114911.7
(22) Anmeldetag: 28.08.1997
(51) Int. Cl.: B60J 5/10

(54) **Kraftfahrzeug mit einer Heckklappe**

(30) Priorität: 08.10.1996 DE 19641360
(71) Anmelder: YMOS AKTIENGESELLSCHAFT Industrieprodukte, 63179 Obertshausen (DE)
(72) Erfinder: Niebergall, Holger, 65597 Hünfelden (DE); Rauchhaus, Martin, 63110 Rodgau (DE)
(74) Vertreter: Podszus, Burghart, Dipl.-Phys., Dipl.-Wirtsch.-Ing.

(57) **Zusammenfassung**

Die Erfindung betrifft ein Kraftfahrzeug (1) mit einer heckseitig angeordneten Tür oder Klappe (2) (im folgenden als Heckklappe bezeichnet), mit einem Unterteil (3) und einem sich an das Unterteil anschließenden, eine Scheibe (8) aufweisenden Oberteil (7), wobei das Oberteil (7) an dem Unterteil (3) um eine erste horizontale Achse (10) schwenkbar angeordnet ist.

Um zu erreichen, daß die Heckklappe (2) kostengünstig herstellbar ist und trotzdem ein Fahren mit geöffnetem Oberteil (7) erlaubt, ohne daß hierdurch das aerodynamische Fahrverhalten des Fahrzeuges (1) wesentlich beeinflußt wird und ohne daß eine Beschädigung der Heckscheibe (8) zu befürchten ist, schlägt die Erfindung vor, daß zur Öffnung der Heckklappe (2) diese seitlich nach außen schwenkbar angeordnet ist, und daß das Oberteil (7) bei geöffneter Heckklappe (2) an die Innenseite (30) des Unterteiles (3) anlegbar oder in eine entsprechende Ausnehmung (11) der Innenseite (30) des Unterteiles (3) einklappbar angeordnet ist.

## Beschreibung

Die Erfindung betrifft ein Kraftfahrzeug mit einer heckseitig angeordneten Tür oder Klappe (im folgenden als Heckklappe bezeichnet) mit einem Unterteil und einem sich an das Unterteil anschließenden, eine Scheibe aufweisenden Oberteil, wobei das Oberteil an dem Unterteil um eine erste horizontale Achse schwenkbar gelagert ist.

Ein derartiges Kraftfahrzeug ist beispielsweise aus der deutschen Gebrauchsmusterschrift G 83 37 431.0 bekannt. Es besitzt eine zweiteilige Heckklappe, die nach oben zum Dachrahmen hin schwenkbar angeordnet und etwa in Höhe der Gürtellinie des Fahrzeuges in ein die Heckscheibe enthaltendes Oberteil und in ein Unterteil geteilt ist, wobei das Unterteil nach Lösen des Heckklappenverschlusses klappmesserartig an das Oberteil anlegbar ist.

Nachteilig ist bei diesem bekannten Kraftfahrzeug, daß es bei einer Fahrt mit geöffneter Heckklappe, z.B. beim Transport überlanger Gegenstände, aufgrund des hochgeklappten Oberteiles ein aerodynamisch ungünstiges Fahrverhalten aufweist. Außerdem besteht die Gefahr einer Beschädigung der in Fahrtrichtung weisenden Heckscheibe.

Zwar wäre auch denkbar, zum Transport überlanger Gegenstände die Heckklappe des Fahrzeuges mit einer in das Unterteil versenkbaren Heckscheibe zu versehen, denn in diesem Falle könnte das jeweilige Ende des zu transportierenden Gegenstandes heckseitig aus der Fensterscheibenöffnung herausragen. Doch würden derartige Heckklappen den Nachteil aufweisen, daß sie aufgrund des erforderlichen Fensterhebermechanismus relativ schwer sind. Außerdem wäre die Fertigung derartiger Heckklappen gegenüber herkömmlichen Klappen wesentlich zeit- und materialaufwendiger, was wiederum mit hohen Herstellkosten verbunden wäre.

Der Erfindung liegt die Aufgabe zugrunde, ein Kraftfahrzeug mit einer kostengünstig herstellbaren Heckklappe anzugeben, die ein Fahren mit geöffnetem Oberteil erlaubt, ohne daß hierdurch das aerodynamische Fahrverhalten des Fahrzeuges wesentlich beeinflußt wird und ohne daß eine Beschädigung der Scheibe zu befürchten ist.

Diese Aufgabe wird erfindungsgemäß durch die Merkmale des kennzeichnenden Teils des Anspruchs 1 gelöst. Weitere besonders vorteilhafte Ausgestaltungen der Erfindung offenbaren die Unteransprüche.

Die Erfindung beruht im wesentlichen auf dem Gedanken, daß die Heckklappe nicht zum Dachrahmen hin, sondern seitlich nach außen schwenkbar angeordnet ist, und daß das Oberteil der Heckklappe derart nach unten klappbar angeordnet ist, daß es bei geöffneter Heckklappe an die Innenseite des Unterteiles anlegbar ist.

Zum Transportieren entsprechender Gegenstände wird daher zunächst die Heckklappe seitlich geöffnet, anschließend das Oberteil heruntergeklappt und schließlich die Heckklappe mit nach innen heruntergeklappten und an der Innenwand des Unterteiles fixiertem Oberteil geschlossen.

Um eine Beschädigung der Heckscheibe vom Wageninneren zu vermeiden, hat es sich als vorteilhaft erwiesen, wenn das Unterteil innenseitig eine entsprechende Ausnehmung besitzt, in welche das Oberteil einklappbar ist. Vorzugsweise wird die Heckscheibe in der Ausnehmung fixiert und durch eine klappbare Innenwand abgedeckt. Die Innenwand kann dabei sowohl horizontal als auch vertikal klappbar angeordnet sein.

Um ein schnelles Herunterklappen des Oberteiles sicherzustellen, werden die zum Öffnen der Heckklappe erforderlichen Scharniere an dem Unterteil der Heckklappe (und nicht auch an dem gegebenenfalls vorhandenen Rahmenteil des Oberteiles) angeordnet.

Weitere Einzelheiten und Vorteile der Erfindung ergeben sich aus dem folgenden anhand von Figuren erläuterten Ausführungsbeispiel. Es zeigen:
- Fig.1: eine perspektivische Ansicht eines erfindungsgemäßen Kraftfahrzeuges mit geöffneter, aus Ober- und Unterteil bestehender Heckklappe;
- Fig.2: eine Fig.1 entsprechende Ansicht des heckseitigen Teiles des Kraftfahrzeuges mit heruntergeklappter Innenverkleidung des Unterteiles der Heckklappe,
- Fig.3: eine Fig.2 entsprechende Ansicht mit in das Unterteil eingeklapptem Oberteil der Heckklappe und
- Fig.4: eine Explosionsdarstellung einer Heckklappe mit klappbarem Oberteil.

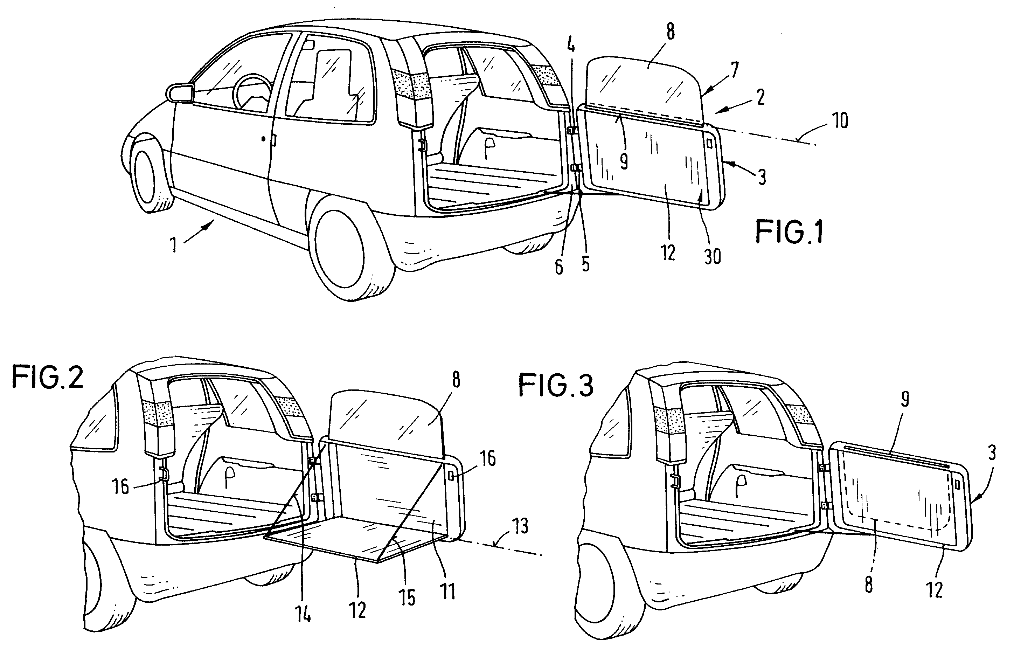

In Fig.1 ist mit 1 ein Personenfahrzeug bezeichnet, welches heckseitig eine Heckklappe 2 besitzt. Die Heckklappe besteht im wesentlichen aus einem Unterteil 3, welches über Scharniere 4, 5 an dem hinteren rechten Seitenholm 6 schwenkbar angeordnet ist, und einem Oberteil 7. Das Oberteil 7 setzt sich aus einer Heckscheibe 8 und einem dem Unterteil 3 zugewandten Rahmenteil 9 (Fensterschiene), durch welches die Heckscheibe 8 gehalten wird, zusammen. Das Rahmenteil 9 ist in bezug auf das Unterteil 3 mittels entsprechender, aus Übersichtlichkeitsgründen nicht dargestellter Scharniere oder Gelenke um eine erste horizontale Achse 10 schwenkbar gelagert.

Das Unterteil 3 besitzt auf seiner Innenseite 30 eine Ausnehmung 11 (Fig.2), in welche das Oberteil 7 eingeklappt werden kann, und die durch eine in Fig.1 mit 12 bezeichnete Innenverkleidung verdeckbar ist. Die Innenverkleidung 12 ist ebenfalls an dem Unterteil 3 um eine zweite horizontale Achse 13 klappbar angeordnet und wird in ihrer ausgeklappten Stellung durch zwei Fangbänder 14, 15 gehalten.

Im folgenden wird das Öffnen der Heckscheibe 8 näher erläutert: Zunächst wird die Heckklappe 2 durch Betätigung eines Verschlusses 16 in an sich bekannter Weise geöffnet (Fig.1). Nach dem Öffnen der Heckklappe 2 wird die Innenverkleidung 12 durch Lösen entsprechender seitlich angeordneter Drehriegel (nicht dargestellt) entriegelt und nach unten geklappt (Fig.2). In dieser Lage wird die Innenverkleidung 12 durch die beiden Fangbänder 14, 15 gehalten.

Anschließend wird die Verriegelung zwischen Unter- und Oberteil 3 und 7 gelöst und das im wesentlichen aus der Heckscheibe 8 bestehende Oberteil 7 nach unten in die Ausnehmung 11 des Unterteiles 3 geklappt (Fig.3). Die Innenverkleidung kann dann nach oben zurückgeklappt und verriegelt werden. Dadurch wird das Oberteil 7 ebenfalls in der Ausnehmung fixiert, so daß Bewegungen der Heckscheibe 8 während der Fahrt innerhalb der Ausnehmung 11 nicht möglich sind. Schließlich wird die Heckklappe wieder geschlossen.

Um wiederum zu einer geschlossenen Heckklappe 2 zu gelangen, wird das Oberteil 7 nach Öffnen der Heckklappe 2, Entriegeln und Herunterklappen der Innenverkleidung 12 nach oben geklappt und in der hochgeklappten Stellung fixiert.

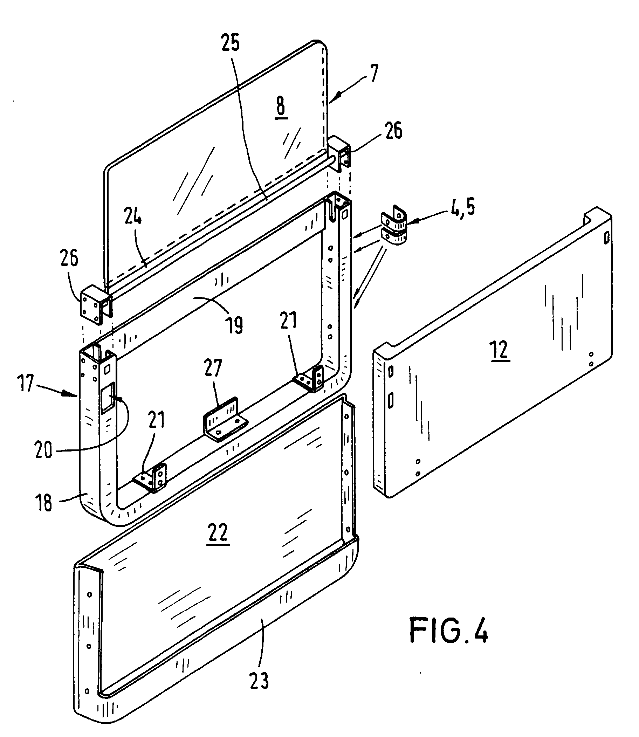

In Fig.4 ist eine Explosionsdarstellung der Heckklappe 2 dargestellt, die den wesentlichen konstruktiven Aufbau einer derartigen Klappe zeigt, wobei für die Erfindung unwesentliche Teile weggelassen sind. Die Tragstruktur der Heckklappe 2 bildet ein Aluminium-Rahmen 17, der aus 2 Teilen 18, 19 zusammengefügt ist. Das untere Teil ist ein U-förmig gebogenes Vierkantprofil 18, in dem oben ein Strangpreßprofil als Quertraverse 19 eingeschweißt ist.

An dem Rahmen 17 sind seitlich die Scharniere 4, 5 für die Befestigung der Klappe 2 am Fahrzeugrohbau angeschraubt. Auf der gegenüberliegenden Seite befindet sich eine Ausbuchtung 20 für ein Türschloß (nicht dargestellt). Die Innenverkleidung 12 aus Kunststoff wird im unteren Bereich über Scharniere 21 an dem Rahmen 17 befestigt. Im oberen Bereich des Rahmens ist die Innenverkleidung 12 mit einer aufgesteckten Dichtung (nicht dargestellt) versehen, welche die Scheibe 8 bei geöffneter Klappe fixiert.

Eine Außenverkleidung 22 der Heckklappe ist von unten auf den Aluminiumrahmen 17 aufgeschoben und wird durch den Umbug 23 an dem Rahmen gehalten. Im oberen Bereich ist eine Verbindung der Außenverkleidung 22 mit der Quertraverse 19 durch eine aufgesteckte Dichtung (nicht dargestellt) mit Metalleinlage gewährleistet. Die Dichtung dient gleichzeitig als Endanschlag für die klappbare Scheibe 8.

Die Scheibe 8 ist mit einem Scheibenrahmen 24 verklebt, welcher auf einer drehbaren Achse 25 befestigt ist. Die Achse 25 wird rechts und links in einen Scharnierblock 26 eingeschoben. Dieser Scharnierblock 26 wird dann von oben in den Rahmen 17 eingesetzt und verschraubt.

Bei eingeklappter Scheibe 8 erfolgt die Justierung durch einen Endanschlag 27, der unten am Rahmen 17 befestigt ist. Die Scheibe wird in dieser Stellung durch eine auf der Innenverkleidung 12 abgestellte Rippe (nicht dargestellt), welche mit einem aufgesteckten Gummi-Profil versehen ist, gegen den Anschlag 27 gedrückt.

Die Erfindung ist selbstverständlich nicht auf das vorstehend beschriebene Ausführungsbeispiel beschränkt. So kann beispielsweise die Innenverkleidung des Unterteiles anstatt nach unten auch zu einer Seite klappbar angeordnet werden. Ferner braucht das Oberteil nicht zwangsweise im wesentlichen nur aus einer Heckscheibe zu bestehen, sondern kann beispielsweise von einem Halterahmen randseitig umgeben sein.

### Bezugszeichenliste

- 1: Fahrzeug, Personenfahrzeug
- 2: Heckklappe
- 3: Unterteil
- 30: Innenseite
- 4,5: Scharniere
- 6: Seitenholm
- 7: Oberteil
- 8: Heckscheibe, Scheibe
- 9: Rahmenteil
- 10: erste horizontale Achse
- 11: Ausnehmung
- 12: Innenverkleidung
- 13: zweite horizontale Achse
- 14,15: Fangbänder
- 16: Verschluß
- 17: Rahmen
- 18: Vierkantprofil
- 19: Quertraverse
- 20: Ausbuchtung
- 21: Scharnier
- 22: Außenverkleidung
- 23: Umbug
- 24: Scheibenrahmen 25 Achse
- 26: Scharnierblock
- 27: Endanschlag

## Patentansprüche

1. Kraftfahrzeug mit einer heckseitig angeordneten Tür oder Klappe (2) (im folgenden als Heckklappe bezeichnet), mit einem Unterteil (3) und einem sich an das Unterteil anschließenden, eine Scheibe (8) aufweisenden Oberteil (7), wobei das Oberteil (7) in bezug auf das Unterteil (3) um eine erste horizontale Achse (10) schwenkbar gelagert ist, **dadurch gekennzeichnet**, daß zur Öffnung der Heckklappe (2) diese seitlich nach außen schwenkbar angeordnet ist, und daß das Oberteil (7) bei geöffneter Heckklappe (2) an die Innenseite (30) des Unterteiles (3) anlegbar oder in eine entsprechende Ausnehmung (11) der Innenseite (30) des Unterteiles (3) einklappbar angeordnet ist.

2. Kraftfahrzeug nach Anspruch 1, **dadurch gekennzeichnet**, daß zum Öffnen der Heckklappe (2) das Unterteil (3) an mindestens einem der hinteren Seitenholmen (6) des Fahrzeuges (1) über Scharniere (4,5) nach außen schwenkbar angeordnet ist.

3. Kraftfahrzeug nach Anspruch 1 oder 2, **dadurch gekennzeichnet**, daß die Ausnehmung (11) des Unterteiles (3) durch eine schwenk- und verrastbare Innenverkleidung (12) mindestens teilweise abdeckbar ist, derart, daß nach dem Einklappen des Oberteiles (7) in das Unterteil mindestens die Heckscheibe (8) durch die Innenverkleidung (12) verdeckt wird.

4. Kraftfahrzeug nach Anspruch 3, **dadurch gekennzeichnet**, daß das Oberteil (7) in seiner heruntergeklappten Stellung mit dem Unterteil (3) verrastbar ist.

5. Kraftfahrzeug nach Anspruch 4**, dadurch gekennzeichnet**, daß an der Innenverkleidung (12) ein lösbarer Verschluß angeordnet ist, derart, daß das Oberteil (7) im eingeklappten Zustand durch die Innenverkleidung (12) fixiert wird.
